# EUROPEAN PATENT APPLICATION

(11) **EP 2 845 494 A1**
(43) Date of publication of application: **11.03.2015**
(21) Application number: 14183630.4
(22) Date of filing: 04.09.2014
(51) Int. Cl.: A23L 1/00, A23L 1/315, A23L 1/325, A23B 4/10, A23B 4/06

(54) **A frozen food product and method of preparing a frozen food product**

(30) Priority: 04.09.2013 GB 201315700
(71) Applicant: Birds Eye IPCO Limited, Feltham, Middlesex TW14 8HA (GB)
(72) Inventor: Rahmen, Judith, 50735 Köln (DE)
(74) Representative: Finnie, Peter John

(57) **Abstract**

A method of preparing a frozen food product, preferably a frozen poultry or fish product, comprising the steps of:
a) providing a food portion to be frozen;
b) applying to or coating the bottom or underside of said food portion with an edible hygroscopic material;
c) freezing the food product; and
d) applying water to the bottom or underside of said frozen food product.

## Description

The present invention relates to a method for preparing a frozen food product, especially a frozen fish or poultry product, and frozen food products.

It is known to prepare for vending fish and poultry products in frozen form. Typically, such products are fast frozen and packed in plastic pouches or trays. For some products, such as fish fillets, it is known to apply a sauce to the fish so as to form a layer of frozen sauce partially covering, enrobing or topping the fish.

A disadvantage of this product is that a relatively large amount of liquid may be released from the fish during cooking. This released liquid may result in a consumer perception that there is excessive residual liquid after cooking, and may lead to consumers rejecting the cooked product.

According to a first aspect there is provided a method of preparing a frozen food product, preferably a frozen poultry or fish product, comprising the steps of:
a) providing a food portion to be frozen;
b) applying to or coating the bottom or underside of said food portion with an edible hygroscopic material;
c) freezing the food product; and
d) applying water to the bottom or underside of said frozen food product.

Prior to step a), grill marks could be applied to the top of the food product.

A solution of reducing sugars could be applied to the top surface of the food product prior to application of the grill marks. The solution could be a dextrose solution.

The hygroscopic material could comprise any of dried vegetables, dried fruits, herbs, cereals, oil based flavours, fibres, and other dry and/or powdered hygroscopic ingredients or combinations or mixtures thereof. The hygroscopic material could comprise a mixture of dried tomato and dried paprika, and could comprise a mixture of 50% dried tomato chips and 50% dried paprika chips.

The freezing step could be carried out using Nitrogen freezing.

A glaze could be applied to the frozen food product. The glazing solution could be any potable/edible water, oil or starch- based liquid such as water or stock.

The method could further comprise addition of an ingredient preparation to the top of the food portion prior to freezing in step c). The food portion could be a fish portion; said fish portion could be a moulded fish product or a natural fish product.

The frozen food product could be packaged in a tray having a corrugated surface.

An embodiment of the present invention will now be described, by way of example only, with reference to the accompanying drawings, in which:
Figure 1 is a flow chart of an example method of preparing a frozen food product;
Figure 2 is a schematic side view of an example food portion;
Figure 3 is a schematic top view of an example food portion.

In the following, the invention will be described, by way of example only, as used for the preparation of a frozen fish product formed from a fish fillet. However, as noted above, the invention also finds application with other food products.

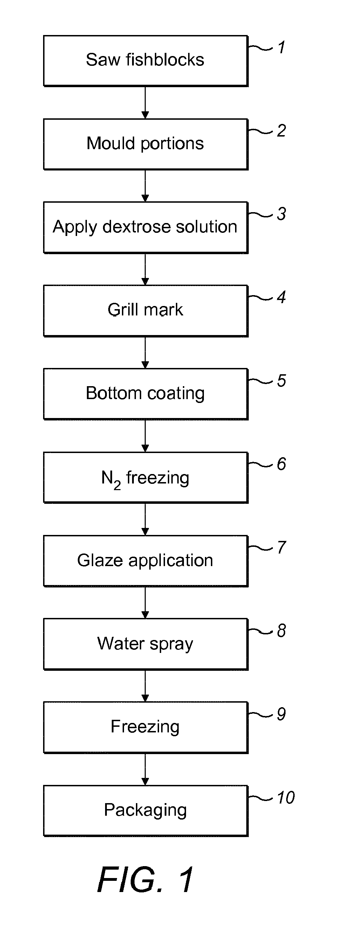

Figure 1 is a flow chart describing one example of the inventive method. In step 1 fish blocks are sawn into portions having a standard size. However, as one of skill in the art would appreciate the invention may be applicable not only to moulded fish portion but to natural fish portions as well.

Fish blocks are a standard form in which fish for processing is supplied which will be well known to the skilled person and does not need to be described in detail herein. In one example the sawn portions can be in the range of anywhere from approximately 100-150mm in length, 20-100mm wide and 10-50 mm in height. However, as one skilled in the art would appreciate the invention is applicable to a food portion of any suitable size and is not limited in this respect.

In other examples, methods other than sawing may be used to form the portions.

Step 1 may take place separately from the other steps. Once the portions have been formed they may be stored or transported before the portions are subject to further processing.

In some examples the sawn portions may be supplied frozen and defrosted by heat treatment before being further processed.

In step 2 the sawn portions are moulded into the desired food product shape. In one example this moulding may be carried out using a constraint shaping or wet moulding technology.

In step 3 a dextrose solution is applied to the top of the moulded portion. In one example about 1g of a dextrose solution formed by dissolving 250g of dextrose in 750g of water is applied to the top of the moulded portion using a batter application machine. In other examples, solutions of other reducing sugars or combinations of reducing sugars could be used.

In step 4 grill marks are applied to the top of the moulded portion using a grill marker. In one example the grill marks may be applied using a rotating grill disk at a temperature of about 600°C. In one example five grill marks are applied at an angle of approximately 45° to the sides of the moulded portion. The dextrose solution assists in the application of the grill marks, increasing the intensity of the grill marks produced on the moulded fish portion by the grill disk.

In other examples the number and angle of the grill marks can be varied.

In step 5 the lower part of the moulded portion is coated with a dry bottom coating by passing the moulded portion through an under bed of a dry coating mixture so that the dry coating mixture adheres to the bottom surfaces of the moulded portion. In order for this to occur the bottom surface of the portion may be damp or have a coating thereon to which the dry coating mixture can better adhere. This can occur by virtue of a heating step or by the application of water or steam or suitable sauce. For example, heat generated by the application of grill marks in step 4 could cause the portion to 'sweat', making it bottom surface damp. In one example the bottom coating may be carried out using a breading machine.

Preferably, the bottom coating is hygroscopic. In some examples the dry bottom coating mainly comprises dried vegetables and herbs. In some examples the bottom coating may comprise dried vegetables,dried fruits, herbs, cereals, oil based flavours, fibres, and other dry and/or powdered hygroscopic ingredients. In one example the bottom coating comprises a mixture of dried tomato and dried paprika, for example a mixture of 50% dried tomato chips and 50% dried paprika chips. In another example, the bottom coating comprises dried lemon and onion. Alternatively, the bottom coating could comprise dried herbs, dried garlic and rice breadcrumbs.

In step 6 the coated portion is quick frozen. In one example the quick freezing is carried out using Nitrogen freezing. In some examples the freezing may be carried out using a Nitrogen tunnel. Nitrogen freezing is a well-known technique in the field of food processing, and need not be described in detail herein. After being quick frozen the frozen portion can be kept in an environment at a temperature below freezing point for the remaining steps of the method. In one example the portion may be cooled to a temperature in the range -30°C to -40°C.

In step 7 a glaze is applied to the frozen portion. The glaze can be water based. Due to the sub-zero temperature of the surface of the frozen portion the glaze freezes on the surface of the frozen portion and provides an outer ice coating to the frozen portion. The glazing solution can be any potable water-based liquid such as water or stock. In one example the glaze comprises a mixture of 600g water, 25g olive oil, 16g microsalt, 13g gelatine, and 20 to 60g of flavour ingredients such as spices, dried vegetables, herbs and aroma ingredients.

In step 8 a water spray is used to spray a water mist over the lower coated part of the frozen portion which is covered in the dry bottom coating. The droplets of the water mist are absorbed into the bottom coating and frozen. This frozen water improves the adhesion and immobilisation of the bottom coating, providing an enhanced mechanical bond between the particles of the coating, and assisting the coating to remain in place on the frozen portion during subsequent packaging, handling and transport before it is cooked by the consumer. The amount of water added to the dry bottom coating in this step is relatively small compared to the amount of water which the dry bottom coating is able to absorb.

In step 9 the frozen portion is subjected to conventional freezing, for example in a spiral freezer. This ensures that the water mist freezes the dry bottom coating onto the portion.

In step 10 the frozen portion is packaged. In some examples the frozen portion is packaged by being placed on a tray having a corrugated bottom surface. In one example the tray is an aluminium tray having a corrugated bottom surface.

The frozen portion and tray may be inserted into a cardboard outer package for vending as is known in the art.

In some examples the mass of the frozen portion may be in the range 30g to 500g.

The above description of the method describes the production of a single frozen fish product. In some examples a plurality of the frozen fish products may be packaged together in the final step 10. In some examples a plurality of the frozen fish products may be packaged together.

In some examples, an ingredient preparation such as a sauce or marinade or herbs, spices, vegetable pieces or grated cheese may be added to the top of the fish product after step 7 or step 8.

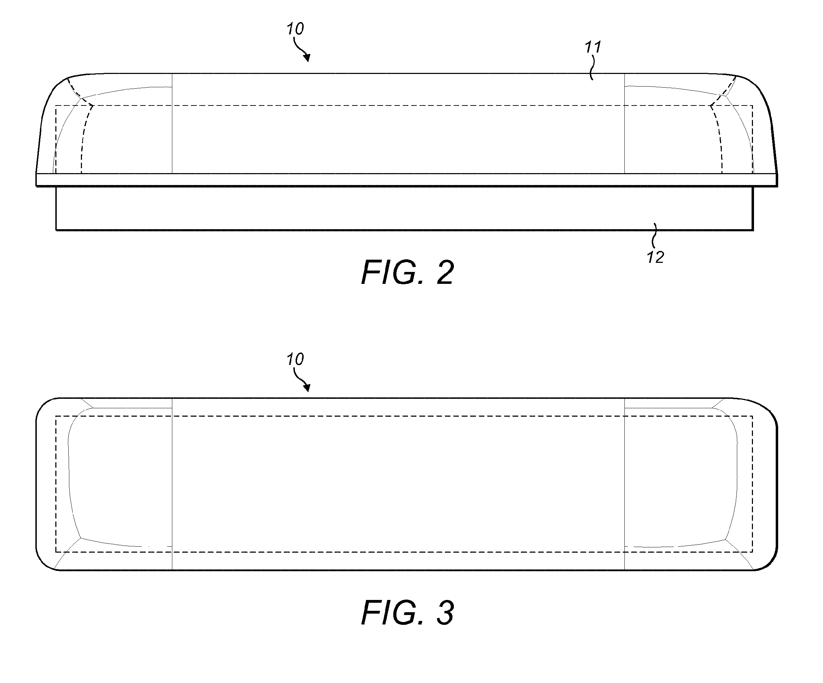

In practice the method described above will generally be carried out as a continuous production line process to produce a large number of the frozen fish products.
An example of a fish product according to the present invention is shown in Figures 2 to 3. Figure 2 shows a side view of an example fish product 10.Figure 3 shows a top view of the fish product 10. The fish product 10 comprises a moulded fish portion 11 having a lower side covered in a layer of a dry coating 12. As explained above, the dry coating 12 could mainly comprise dried vegetables and herbs.

The fish product 10 can be cooked and prepared for consumption by heating the fish product on the tray. When the fish product is cooked, the dry coating may absorb some, or all, of the liquid released by the fish portion part of the fish product during cooking.

This may at least partly overcome the problem of users perceiving the amount of released liquid as excessive and rejecting the cooked fish product. Further, the vegetable based coating together with absorbed liquid may cause consumers to perceive the cooked food product as juicier and/or tastier when eaten.

A further advantage of the fish product according to the invention is that the vegetable based dried coating is high in fibre and may provide good gut fill to consumers, causing them to find the cooked fish product more filling and satisfying.

A further advantage of the fish product according to the invention is that the vegetable based dried coating may provide flavour, allowing the fish product to be prepared with low or no fat content in the glaze without the cooked fish product being perceived as bland by consumers.

In the illustrated example the fish product is substantially rectangular. In other examples the fish product may have other shapes, for example round, oval, ellipsoid, rectangular, multifaceted, etc.

In the above example, the fish product has been described as being frozen during the method of Figure 1. However, the inventive method could be applied to food portions that are already frozen at the start of the method.
Whilst the present invention finds particularly advantageous application with fish food products it can also be applied to other food products such as other meat products including poultry, beef, pork and lamb as will be appreciated by the person skilled in the art.

The food portion could be subject to one or more processing steps prior to positioning the ingredient preparation. For example, the food portion could be subject to washing, de-boning, gutting, etc.

The food portion could comprise a single piece of food, such as a fish fillet or a poultry breast piece or could comprise a plurality of pieces of food that are combined to form a single food portion in a known manner. For example, the food portion could be formed from multiple pieces of food which are reformed (with or without binding agents) in a known manner into a desired shape.Examples include minced poultry meat and cohering fish flesh prepared from fillets or minced fish flesh.

The above description relates to exemplary embodiments of the invention. The skilled person will be able to envisage alternatives within the scope of the present invention as set out in the appended claims.

## Claims

1. A method of preparing a frozen food product, preferably a frozen poultry or fish product, comprising the steps of:
a) providing a food portion to be frozen;
b) applying to or coating the bottom or underside of said food portion with an edible hygroscopic material;
c) freezing the food product; and
d) applying water to the bottom or underside of said frozen food product.

2. A method according to claim 1 wherein prior to step a), grill marks are applied to the top of the food product.

3. A method according to claim 2 wherein a solution of reducing sugars is applied to the top surface of the food product prior to application of the grill marks.

4. A method according to claim 3, wherein the solution is a dextrose solution.

5. A method according to any preceding claim wherein the hygroscopic material comprises any of dried vegetables, dried fruits, herbs, cereals, oil based flavours, fibres, and other dry and/or powdered hygroscopic ingredients.

6. A method according to any preceding claim wherein the hygroscopic material comprises a mixture of dried tomato and dried paprika, optionally a mixture of 50% dried tomato chips and 50% dried paprika chips.

7. A method according to any preceding claim wherein the freezing step is carried out using Nitrogen freezing.

8. A method according any preceding claim further comprising applying a glaze to the frozen food product.

9. A method according to claim 8, wherein the glazing solution is any potable water or oil-based liquid such as water or stock.

10. A method according to any preceding claim wherein the method further comprises addition of an ingredient preparation to the top of the food portion prior to freezing in step c).

11. A method according to any preceding claim, wherein the food portion is a fish portion.

12. A method according to clam 11 wherein the fish portion is a moulded fish product.

13. A method according to any preceding claim wherein the frozen food product is packaged in a tray having a corrugated surface.
